# EUROPEAN PATENT APPLICATION

(11) **EP 1 613 029 A2**
(43) Date of publication of application: **04.01.2006**
(21) Application number: 04021295.3
(22) Date of filing: 08.09.2004
(51) Int. Cl.: H04M 1/57

(54) **Adaptive notification about the identity of the caller**

(30) Priority: 30.06.2004 US 882042
(71) Applicant: Avaya Technology Corp., Basking Ridge, New Jersey 07920-2332 (US)
(72) Inventor: Seligmann, Doree Duncan, New York New York 10021 (US); Moody, Taryn, Atlantic Highlands New Jersey 07716 (US)
(74) Representative: Schneck, Herbert

(57) **Abstract**

A method and apparatus are disclosed for enabling a telecommunication terminal (200) to notify its user of the arrival of a message via an acoustic or visual signal whose properties are based on one or more attributes of the message. The illustrative embodiment sets the values of one or more properties of a ringtone (430), *e.g.*, tempo, volume, pitch, rhythm, *etc.*, based on one or more attributes of an incoming message, *e.g.*, who the sender of the message is, a priority associated with the message, a subject associated with the message, the semantic content of the message, the location from which the message was sent, *etc*. Similarly, properties of text (450), *e.g.*, font size, font style, color, dynamic behavior such as flashing, *etc.*, and of images (440), *e.g.*, brightness, size, contrast, resolution, *etc.*, for notifying the user of an incoming message are set based on attributes of the message.

## Description

### Field of the Invention

The present invention relates to telecommunications in general, and, more particularly, to techniques for intelligently notifying the user of a telecommunications terminal of the arrival of a message.

### Background of the Invention

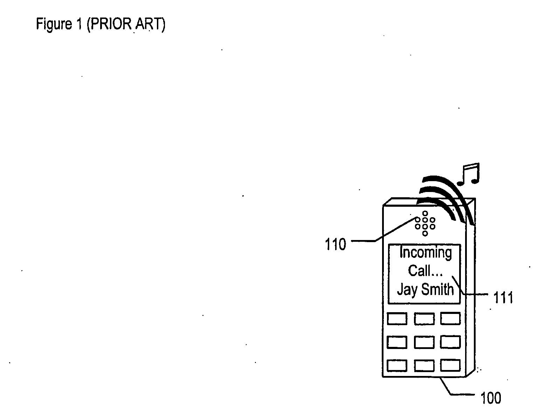

Figure 1 depicts telecommunications terminal 100 (*e.g*., a wireless telephone, a wireline telephone, a personal digital assistant [PDA], *etc*.) in accordance with the prior art. Telecommunications terminal 100 is capable of receiving messages (*e.g*., voice telephone calls, email messages, Short Message Service [SMS] messages, *etc*.) from other telecommunications terminals via a network such as the Public Switched Telephone Network [PSTN], a cellular wireless network, a wireless local-area network, *etc*.

When telecommunications terminal 100 receives a message, it notifies the user of the terminal of the arrival of the message by playing a "ringtone" (*e.g*., a tune, a series of beeps, *etc*.) via speaker 110 and by displaying visual information (*e.g*., text, an image, *etc*.) via display 111. Telecommunications terminal 100 might play a particular ringtone for all incoming messages, or a ringtone that is associated with a category of callers (*e.g*., a ringtone for business contacts, a ringtone for friends, a ringtone for family members, *etc*.), or a ringtone that is associated with an individual caller, *etc*. Similarly, telecommunications terminal 100 might display a text message (*e.g*., "Incoming Call", "Incoming Call: Mom", "Incoming Call: 555-555-5555", *etc*.) or an image (*e.g*., an animated icon of a ringing telephone, a photo of the caller, *etc*.), or both, to indicate that there is an incoming message.

### Summary of the Invention

The present invention enables a telecommunications terminal to notify its user of the arrival of a message via an acoustic or visual signal whose properties are based on one or more attributes of the message. In particular, the illustrative embodiment sets the values of one or more properties of a ringtone (*e.g*., tempo, volume, pitch, rhythm, *etc*.) based on one or more attributes of an incoming message (*e.g*., who the sender of the message is, a priority associated with the message, a subject associated with the message, the semantic content of the message, the location from which the message was sent, etc.). For example, if a telecommunications terminal plays the Beatles song "Hello Goodbye" when a message arrives, the song might be played in a variety of ways, depending on attributes of the message:
- at a faster tempo when the message has a high priority,
- at a louder volume when the subject of an email contains the word "urgent,"
- as a piano version when the caller (*i*.*e*., the sender of the message) is pianist Murray Perahia,
- with minor-mode instead of major-mode harmonies when the text of an email contains a frowning smiley [*i.e*., a ":(" character combination],
- with a female voice singing instead of a male voice when the caller is Gloria Steinem,
- with lyrics sung in French when the call originates from France, or
- with a Latin rhythm when the caller is Julio Iglesias.
As will be appreciated by those skilled in the art, modifying the values of properties such as volume and tempo does not change the fundamental identity of the song. In other words, the *melody* of the song is independent of these properties and thus the song remains recognizable.

The illustrative embodiment also sets property values of text (*e.g*., font size, font style, color, dynamic behavior such as flashing, *etc*.) and images (*e.g*., brightness, size, contrast, resolution, *etc*.) that are displayed to notify the user of an incoming message in a similar fashion (*i.e*., based on one or more attributes of the message). For example, when a message with a high priority is received, a text notification might flash or might be rendered in a bold font; a static image might be displayed at a higher brightness; and an animated image might move at a faster speed.

The illustrative embodiment comprises: (a) receiving a message at a telecommunications terminal; and (b) determining the value of a property of a musical composition based on an attribute of the message; wherein the musical composition is for notifying the user of the telecommunications terminal of the arrival of the message; and wherein the melody of the musical composition is independent of the property.

### Brief Description of the Drawings

Figure 1 depicts a telecommunications terminal in the prior art.

Figure 2 depicts a telecommunications terminal in accordance with the illustrative embodiment of the present invention.

Figure 3 depicts a block diagram of the salient components of telecommunications terminal 200, as shown in Figure 2, in accordance with the illustrative embodiment of the present invention.

Figure 4 depicts a flowchart of the operation of telecommunications terminal 200, as shown in Figure 2, upon receiving a message, in accordance with the illustrative embodiment of the present invention.

Figure 5 depicts a detailed flowchart of task 430, as shown in Figure 4, in accordance with the illustrative embodiment of the present invention.

Figure 6 depicts a detailed flowchart of task 440, as shown in Figure 4, in accordance with the illustrative embodiment of the present invention.

Figure 7 depicts a detailed flowchart of task 450, as shown in Figure 4, in accordance with the illustrative embodiment of the present invention.

### Detailed Description

The term appearing below is given the following definition for use in this Description and the appended Claims.

For the purposes of the specification and claims, the term **"musical composition**" is defined as either a piece of music or a sound effect (*e.g*., one or more beeps, etc.).

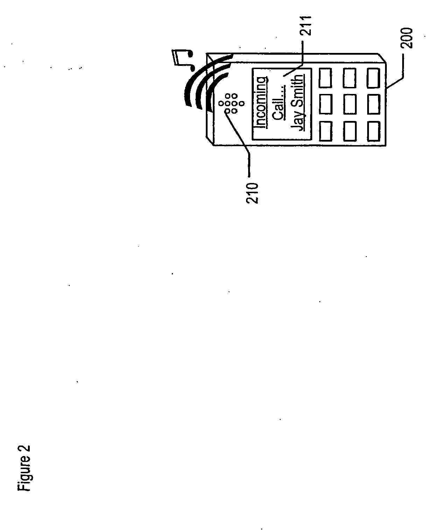

Figure 2 depicts telecommunications terminal 200 in accordance with the illustrative embodiment of the present invention. As shown in Figure 2, telecommunications terminal 200 comprises speaker 210 and display 211. Speaker 210, like speaker 110 of telecommunications terminal 100, is capable of generating acoustic signals (*e.g*., ringtones, *etc.*) in well-known fashion. Display 211, like display 111 of telecommunications terminal 100, is capable of displaying visual signals (*e.g*., text, images, etc.) in well-known fashion.

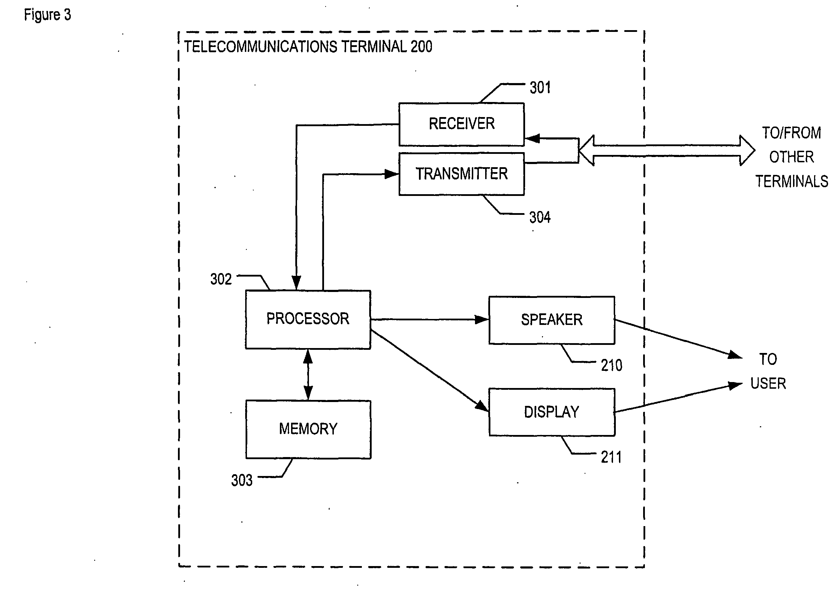

Figure 3 depicts a block diagram of the salient components of telecommunications terminal 200, in accordance with the illustrative embodiment of the present invention. As shown in Figure 3, telecommunications terminal 200 comprises receiver 301, processor 302, memory 303, transmitter 304, speaker 210, and display 211, interconnected as shown.

Receiver 301 receives signals sent from other telecommunications terminals (*e.g*., via the Public Switched Telephone Network [PSTN], via a Code Division Multiple Access [CDMA] base station, *etc*.) and forwards the information encoded in these signals to processor 302, in well-known fashion. It will be clear to those skilled in the art, after reading this disclosure, how to make and use receiver 301.

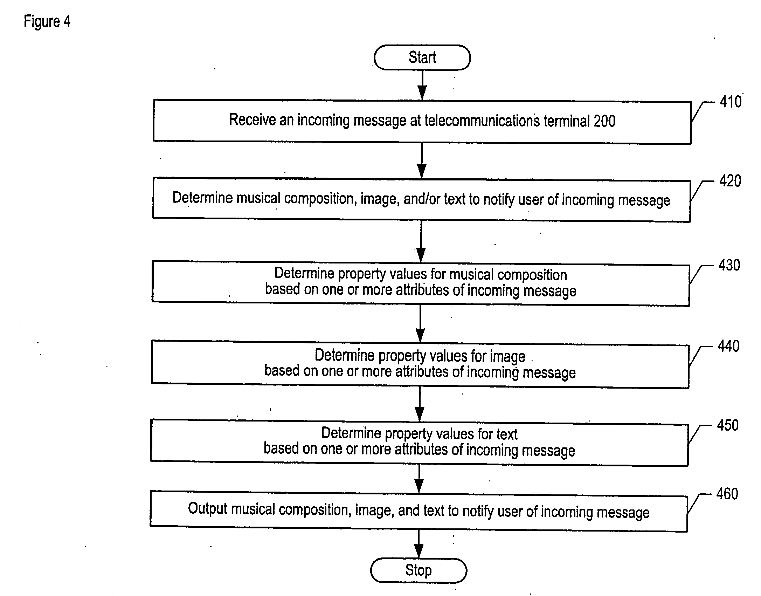

Processor 302 is a general-purpose processor that is capable of reading data from and writing data into memory 303, of sending signals to speaker 210 and display 211 in well-known fashion, and of executing the tasks described below and with respect to Figures 4 through 7. In some alternative embodiments of the present invention, processor 302 might be a special-purpose processor. In either case, it will be clear to those skilled in the art, after reading this disclosure, how to make and use processor 302.

Memory 303 stores data and executable instructions, as is well-known in the art, and might be any combination of random-access memory (RAM), flash memory, disk drive, etc. It will be clear to those skilled in the art, after reading this disclosure, how to make and use memory 303.

Transmitter 304 receives information from processor 302 and transmits signals that encode this information to other telecommunications terminals (*e.g*., via the Public Switched Telephone Network [PSTN], via a Code Division Multiple Access [CDMA] base station, *etc*.) in well-known fashion. It will be clear to those skilled in the art, after reading this disclosure, how to make and use transmitter 304.

Figure 4 depicts a flowchart of the operation of telecommunications terminal 200 upon receiving a message, in accordance with the illustrative embodiment of the present invention. It will be clear to those skilled in the art which tasks depicted in Figure 4 can be performed simultaneously or in a different order than that depicted.

At task 410, receiver 301 of telecommunications terminal 200 receives an incoming message and forwards the message to processor 302, in well-known fashion.

At task 420, processor 302 determines what musical composition (*i.e*., ringtone), what image, and what text are output to notify the user of the incoming message, in the same fashion as telecommunications terminal 100 in the prior art. As described above, in some embodiments telecommunications terminal 200 might play a particular musical composition for all incoming messages, or a musical composition that is associated with a category of callers, or a musical composition that is associated with an individual caller, *etc*. Similarly, in some embodiments telecommunications terminal 200 might determine one or both of a text message and an image to display for signaling the arrival of an incoming message. As will be appreciated by those skilled in the art, in some embodiments telecommunications terminal 200 might not output one or more of a ringtone, image, and text based on preferences set by the user, battery power, capabilities of display 211, *etc*.

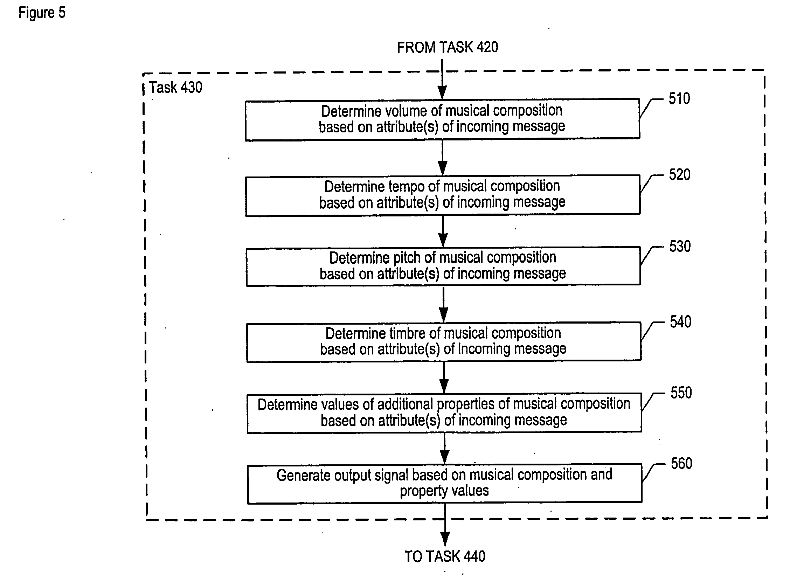

At task 430, processor 302 determines the values of one or more properties for the musical composition that was selected at task 420 based on one or more attributes of the incoming message, as described in detail below and with respect to Figure 5.

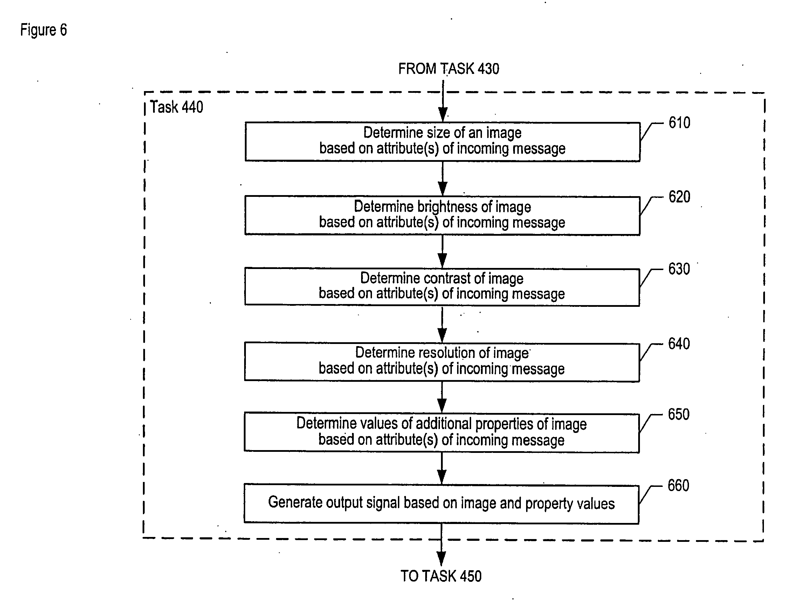

At task 440, processor 302 determines the values of one or more properties for the image that was selected at task 420 based on one or more attributes of the incoming message, as described in detail below and with respect to Figure 6.

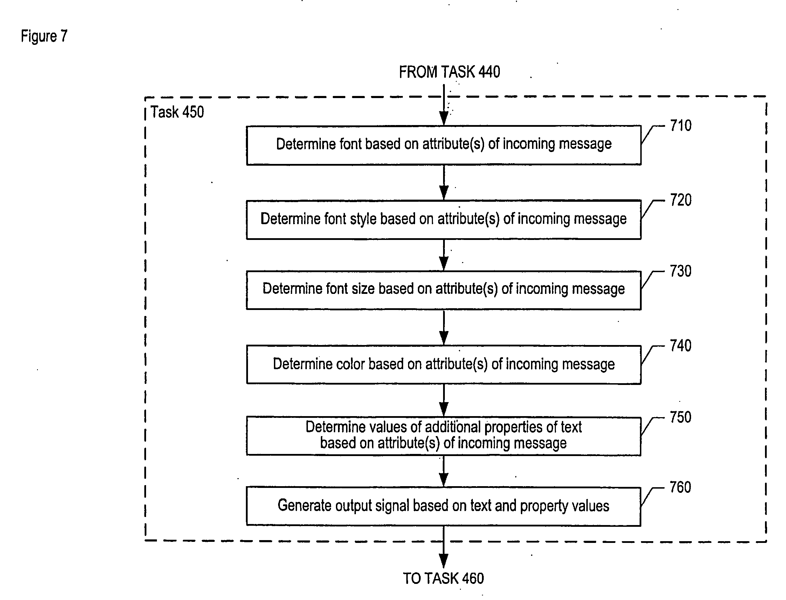

At task 450, processor 302 determines the values of one or more properties for the text from task 420 based on one or more attributes of the incoming message, as described in detail below and with respect to Figure 7.

At task 460, processor 302 (i) sends a signal to speaker 210 to play the musical composition selected at task 420 in accordance with the property values determined at task 430, and (ii) sends a signal to display 211 to display the image and text of task 420 in accordance with the property values determined at tasks 440 and 450, respectively, in well-known fashion. After task 460 the method of Figure 4 terminates.

Figure 5 depicts a detailed flowchart of task 430 in accordance with the illustrative embodiment of the present invention. It will be clear to those skilled in the art which tasks depicted in Figure 5 can be performed simultaneously or in a different order than that depicted.

At task 510, processor 302 determines the volume of the musical composition based on one or more attributes of the incoming message such as the identity of the sender of the message, a priority associated with the message, a subject associated with the message, the semantic content of the message, the location from which the message was sent, *etc.* As will be appreciated by those skilled in the art, determining volume based on the location from which the message was sent is possible only in telecommunications systems that provide such information to terminals.

At task 520, processor 302 determines the tempo of the musical composition based on one or more attributes of the incoming message.

At task 530, processor 302 determines the pitch (*i.e*., key signature) of the musical composition based on one or more attributes of the incoming message.

At task 540, processor 302 determines the timbre (*e.g*., the musical instrument playing the composition, etc.) of the musical composition based on one or more attributes of the incoming message.

At task 550, processor 302 determines the values of additional properties of the musical composition (*e.g*., harmony, rhythm, gender for vocal music, language for vocal music, etc.) based on one or more attributes of the incoming message.

At task 560, processor 302 generates an output signal based on the musical composition and the values of the properties determined at tasks 510-550, in well-known fashion. After task 560, execution continues at task 440.

Figure 6 depicts a detailed flowchart of task 440 in accordance with the illustrative embodiment of the present invention. It will be clear to those skilled in the art which tasks depicted in Figure 6 can be performed simultaneously or in a different order than that depicted.

At task 610, processor 302 determines the size of the image based on one or more attributes of the incoming message such as the identity of the sender of the message, a priority associated with the message, a subject associated with the message, the semantic content of the message, the location from which the message was sent, *etc*. As will be appreciated by those skilled in the art, determining image size based on the location from which the message was sent is possible only in telecommunications systems that provide such information to terminals.

At task 620, processor 302 determines the brightness of the image based on one or more attributes of the incoming message.

At task 630, processor 302 determines the contrast of the image based on one or more attributes of the incoming message.

At task 640, processor 302 determines the resolution of the image based on one or more attributes of the incoming message.

At task 650, processor 302 determines the values of additional properties of the image (*e.g*., hue, saturation, position on display 211, speed of animation, etc.) based on one or more attributes of the incoming message.

At task 660, processor 302 generates an output signal based on the image and the property values determined at tasks 610-650, in well-known fashion. After task 660, execution continues at task 450.

Figure 7 depicts a detailed flowchart of task 450 in accordance with the illustrative embodiment of the present invention. It will be clear to those skilled in the art which tasks depicted in Figure 7 can be performed simultaneously or in a different order than that depicted.

At task 710, processor 302 determines the text font based on one or more attributes of the incoming message such as the identity of the sender of the message, a priority associated with the message, a subject associated with the message, the semantic content of the message, the location from which the message was sent, etc. As will be appreciated by those skilled in the art, determining the font based on the location from which the message was sent is possible only in telecommunications systems that provide such information to terminals.

At task 720, processor 302 determines the font style (e.g., bold, italics, etc.) based on one or more attributes of the incoming message.

At task 730, processor 302 determines the font size based on one or more attributes of the incoming message.

At task 740, processor 302 determines the text color based on one or more attributes of the incoming message.

At task 750, processor 302 determines the values of additional properties of the text (e.g., background color, position on display 211, dynamic behavior, speed of dynamic behavior, etc.) based on one or more attributes of the incoming message.

At task 760, processor 302 generates an output signal based on the image and the values of the image properties determined at tasks 710-750, in well-known fashion. After task 760, execution continues at task 460.

It is to be understood that the above-described embodiments are merely illustrative of the present invention and that many variations of the above-described embodiments can be devised by those skilled in the art without departing from the scope of the invention. For example, in this Specification, numerous specific details are provided in order to provide a thorough description and understanding of the illustrative embodiments of the present invention. Those skilled in the art will recognize, however, that the invention can be practiced without one or more of those details, or with other methods, materials, components, *etc*.

Furthermore, in some instances, well-known structures, materials, or operations are not shown or described in detail to avoid obscuring aspects of the illustrative embodiments. It is understood that the various embodiments shown in the Figures are illustrative, and are not necessarily drawn to scale. Reference throughout the specification to "one embodiment" or "an embodiment" or "some embodiments" means that a particular feature, structure, material, or characteristic described in connection with the embodiment(s) is included in at least one embodiment of the present invention, but not necessarily all embodiments. Consequently, the appearances of the phrase "in one embodiment," "in an embodiment," or "in some embodiments" in various places throughout the Specification are not necessarily all referring to the same embodiment. Furthermore, the particular features, structures, materials, or characteristics can be combined in any suitable manner in one or more embodiments. It is therefore intended that such variations be included within the scope of the following claims and their equivalents.

## Claims

1. A method comprising:
(a) receiving a message at a telecommunications terminal; and
(b) determining, based on an attribute of said message, the value of a property of a musical composition;
wherein said musical composition is for notifying the user of said telecommunications terminal of the arrival of said message; and
wherein the melody of said musical composition is independent of said property.

2. The method of claim 1 wherein said property is one of volume, tempo, and dynamic range.

3. The method of claim 1 wherein said property is one of pitch, timbre, harmony and rhythm.

4. The method of claim 1 wherein said musical composition is vocal and wherein said property is one of gender and language.

5. The method of claim 1 wherein said attribute of said message is one of the sender of said message and a user category associated with the sender of said message.

6. The method of claim 1 wherein said attribute of said message is one of a priority and a subject.

7. The method of claim 1 wherein said attribute of said message is the semantic content of said message.

8. The method of claim 1 wherein said attribute of said message is the location from which said message was sent.

9. A method comprising:
(a) receiving a message at a telecommunications terminal; and
(b) determining, based on an attribute of said message, the value of a property of an image;
wherein said image is for notifying the user of said telecommunications terminal of the arrival of said message; and
wherein the semantic content of said image is independent of said property.

10. The method of claim 9 wherein said property of said image is one of hue, saturation, brightness, and contrast.

11. The method of claim 9 wherein said property of said image is one of size, resolution, and position on a display.

12. The method of claim 9 wherein said property of said image is at least one of: whether said image is animated, the manner in which said image is animated, and the speed at which said image is animated.

13. The method of claim 9 wherein said attribute of said message is one of the sender of said message and a user category associated with the sender of said message.

14. The method of claim 9 wherein said attribute of said message is one of a priority and a subject.

15. The method of claim 9 wherein said attribute of said message is the semantic content of said message.

16. The method of claim 9 wherein said attribute of said message is the location from which said message was sent.

17. A method comprising:
(a) receiving a message at a telecommunications terminal; and
(b) determining, based on an attribute of said message, the value of a property of text;
wherein said text is for notifying the user of said telecommunications terminal of the arrival of said message; and
wherein the content of said text is independent of said property.

18. The method of claim 17 wherein said property of said text is one of font, font style, font size, and font color.

19. The method of claim 17 wherein said property of said text is one of background color and position on a display.

20. The method of claim 17 wherein said property of said text is at least one of: whether said text is dynamic, the manner in which said text is dynamic, and the speed at which said text is dynamic.
